# EUROPEAN PATENT SPECIFICATION

(11) **EP 3 778 398 B1**
(45) Date of publication and mention of the grant of the patent: **08.01.2025**
(21) Application number: 18912749.1
(22) Date of filing: 27.03.2018
(51) Int. Cl.: B64D 11/06

(54) **SEAT UNIT FOR AIRCRAFT**
SITZEINHEIT FÜR FLUGZEUG
UNITÉ SIÈGE POUR AÉRONEF

(43) Date of publication of application: 17.02.2021
(73) Proprietor: Jamco Corporation, Mitaka-shi, Tokyo 181-8571 (JP)
(72) Inventor: KATAKURA, Sachiko, Tachikawa-shi, Tokyo 190-0011 (JP); HAGIWARA, Hisaya, Tachikawa-shi, Tokyo 190-0011 (JP); KINOSHITA, Michio, Tokyo 171-0033 (JP); MATSUMOTO, Manabu, Tokyo 171-0033 (JP); IGARI, Amon, Tokyo 171-0033 (JP); AKUTSU, Yuichi, Tokyo 171-0033 (JP)
(74) Representative: Novaimo
(86) International application number: PCT/JP2018/012405
(87) International publication number: WO 2019/186689

(56) References cited:
- EP-A1- 3 554 947
- EP-B1- 3 554 947
- WO-A1-2017/168746
- WO-A1-2018/051496
- WO-A1-2019/070194
- WO-A2-2011/067286
- JP-A- 2010 501 447
- JP-A- 2011 506 165
- JP-A- 2012 521 328
- JP-A- 2015 511 557
- US-A1- 2010 116 936

## Description

### [Technical Field]

The present invention relates to a seat unit for an aircraft.

### [BACKGROUND OF THE INVENTION]

Among seats provided in aircraft, seats for first class or business class, for example, are known that have seat structures capable of selectively changing between a sitting state in which a backrest stands upright, and a state in which the backrest or the like is reclined to be in a horizontal position that can be used as a bed.

On the other hand, as illustrated in Patent Document 1, there is also known an aircraft seat structure which allows a partition plate between seats arranged in a traversal direction to be moved up and down. According to such a configuration, when another person sits in each seat for example, a private space can be secured for each seat by raising the partition plate. On the other hand, when two passengers such as family members sit side by side, lowering the partition plate creates a single space that can be shared by the two passengers, such that it becomes possible for passengers to use the partition plate accordingly.

### [Prior Art Document]

### [Patent Document]

[Patent Document 1] International Patent Publication No. WO 2017/168746
[Patent Document 2] International Patent Publication No. WO 2019/070194 describes a seat unit comprising a first seat in which a first backrest is pivotable with respect to a first seat portion and is capable of changing forms between a seat state and a bed state, The seat unit further comprises a second seat, disposed adjacent to the first seat, and in which a second backrest is pivotable with respect to a second seating portion between a seat state and a bed state.
[Patent Document 3] American Patent Publication No. US 2010116936 describes a seat unit comprising a first seat, a second seat disposed adjacent to the first seat and an intermediate portion arranged between the first seat and the second seat.

### [Summary of Invention]

### [Technical Problem]

Incidentally, in recent years, the diversification of passengers using aircrafts is progressing, and cases in which families accompanied by infants, for example, board the aircraft are increasing. In such cases, when using a business seat, for example, there are times when adult fees, or an amount close thereto, are charged even for infants, and the economic burden of the passengers becomes excessive. On the other hand, since the body type and weight of infants are a fraction of those of adults, there has been demand for the introduction of small, dedicated seats adapted to the body types of infants, in addition to a low price setting. However, since the boarding of families accompanied by infants is not guaranteed at all times, the introduction into an aircraft of seats dedicated to infants may lead to a decrease in the seat occupancy rate.

It is therefore an object of the present invention to provide a seat unit for an aircraft that can handle the diversification of passengers and effectively utilize the space in the passenger cabin.

### [Means for Solving the Problems]

In order to achieve the above object, a seat unit for an aircraft is defined in claim 1. The seat unit for an aircraft according to the present invention includes a first seat in which a first backrest is pivotable with respect to a first seating portion and that is capable of changing forms between a seat state in which passengers can sit and a bed state in which the first seating portion and the first backrest are flat, a second seat disposed adjacent to the first seat, in which a second backrest is pivotable with respect to a second seating portion and that is capable of changing forms between a seat state in which passengers can sit and a bed state in which the second seating portion and the second backrest are flat, and an intermediate portion arranged between the first seat and the second seat, wherein, in the bed state, the intermediate portion is adjacent to the first backrest and the second backrest while a height of an upper surface of the intermediate portion substantially coincides with a height of the first backrest and the second backrest, the intermediate portion includes a vertically movable partition plate, and in a state in which the partition plate is housed in the intermediate portion, an upper end of the partition plate substantially coincides with or is located at or below an upper surface of the intermediate portion, and when the partition plate is raised, an upper end of the partition plate can move to a position above eye level of a user seated on at least the first seating portion or the second seating portion in the seat state.

### [Advantageous Effects of Invention]

According to the present invention, it is possible to provide a seat unit for an aircraft that can handle the diversification of passengers and effectively utilize the space in the passenger cabin.

### [Brief Description of Drawings]

[Fig. 1] Figure 1 is a top view illustrating an overview of the passenger cabin of an aircraft equipped with a seat unit for an aircraft according to the present embodiment.
[Fig. 2] Figure 2 is perspective view of a seat unit 10 for an aircraft as viewed from diagonally above.
[Fig. 3] Figure 3 is a perspective view of a seat unit 10 for an aircraft as viewed from above and in front.
[Fig. 4] Figure 4 is a diagram illustrating a seat unit 10 for an aircraft as viewed from directly above, and illustrates a seat state.
[Fig. 5] Figure 5 is a diagram illustrating a seat unit 10 for an aircraft as viewed from directly above, and illustrates a bed state.
[Fig. 6] Figure 6 is a cross-sectional view of the line A-A of FIG. 3, and illustrates a state in which the partition plate is raised to the maximum position (a shielded state).
[Fig. 7] Figure 7 is a cross-sectional view of the line A-A of FIG. 3, and illustrates a state in which the partition plate is housed in the intermediate portion (an open state).
[Fig. 8] Figure 8 is a diagram illustrating a use example of the seat unit.

### [Description of Embodiment(s)]

The embodiments of the present invention will be described below with reference to the drawings. It should be noted that, in the present specification, "substantially coincide in height" means that the difference in height is within 2cm (preferably within 1cm). In addition, the terms "forward" and "rearward" refer to the traversal direction of the aircraft and a direction opposite to the traversal direction, respectively.

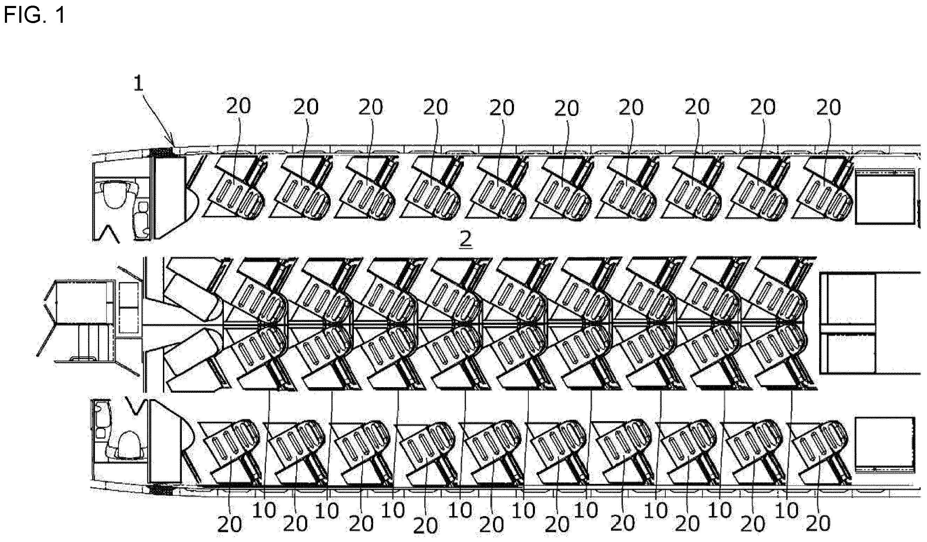

Fig. 1 is a top view illustrating an overview of the passenger cabin of an aircraft equipped with the seat unit for an aircraft according to the present embodiment. In FIG. 1, the upper left side in the figure is the leading side of the aircraft and the right side is the rear side of the aircraft. The aircraft 1 has a plurality of seat units 10 for an aircraft arranged in a line on the floor 2 in the center, and single seats 20 are arranged in a row on both window sides, respectively.

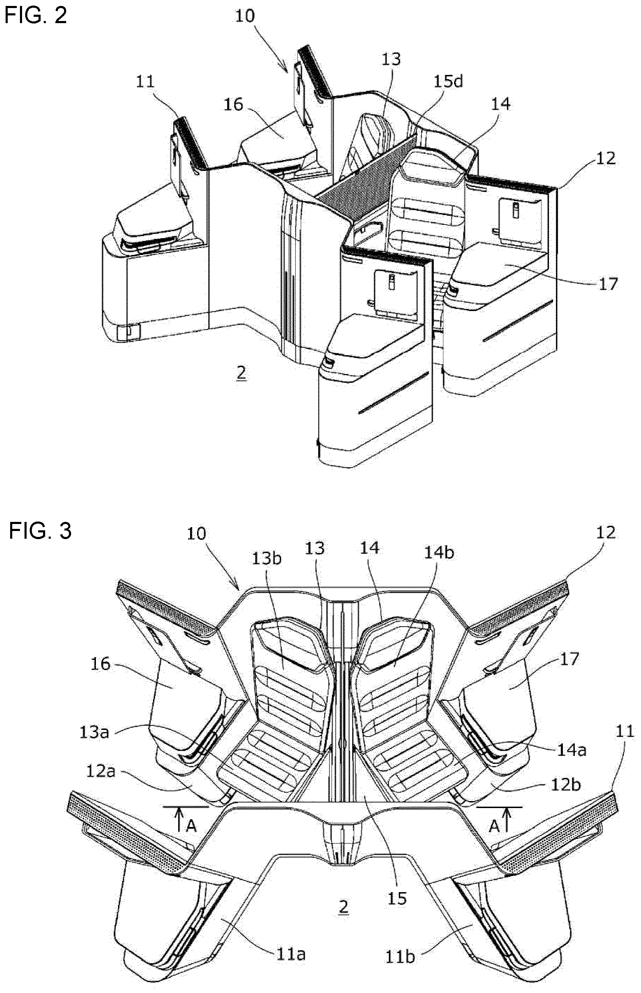

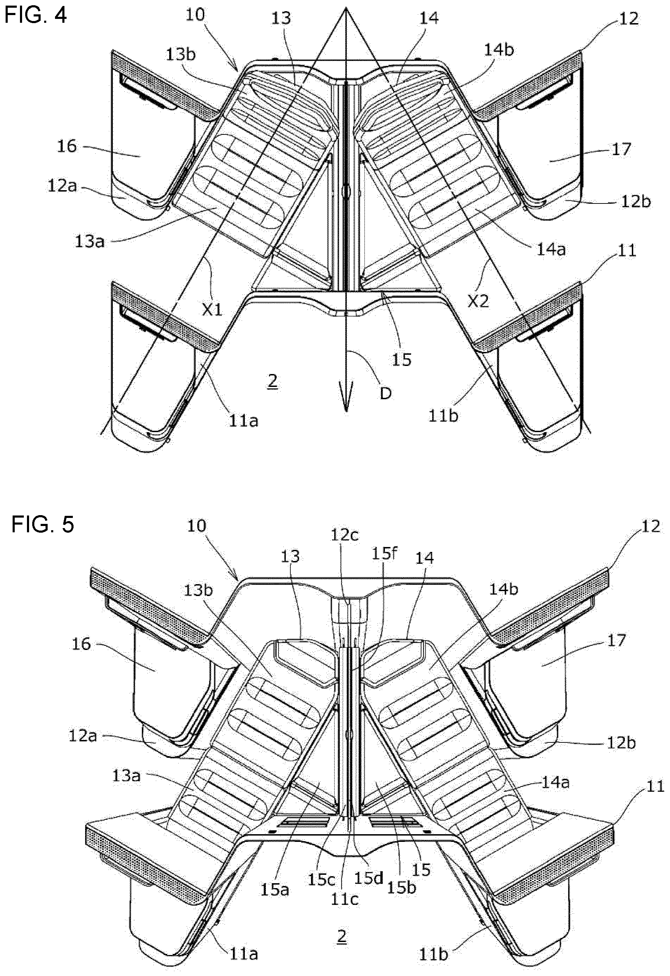

FIG. 2 is a perspective view of a seat unit 10 for an aircraft as viewed from diagonally above. FIG. 3 is a perspective view of a seat unit 10 for an aircraft as viewed from above and in front. FIG. 4 is a diagram illustrating a seat unit 10 for an aircraft as viewed from directly above, and illustrates a seat state. FIG. 5 is a diagram illustrating a seat state 10 for an aircraft as viewed from directly above, and illustrates a bed state.

In FIG. 2 and FIG. 3, the seat unit 10 for an aircraft includes a front wall 11 and a rear wall 12 which are erected from the floor 2 in parallel, a first seat 13 and a second seat 14 arranged adjacent to each other on the floor 2 between the front wall 11 and the rear wall 12, an intermediate portion 15 arranged between the first seat 13 and the second seat 14, a first side table 16 arranged beside the first seat 13, and a second side table 17 arranged beside the second seat 14.

The front wall 11 and the rear wall 12 have a common shape. Due to this, the rear wall 12 of the front side seat unit 10 can also serve as the front wall 11 of the rear side seat unit 10 adjacent thereto. For convenience of description, the seat unit 10 is described as having a front wall 11 and a rear wall 12. However, in practice, the first seat 13, the second seat 14, and the rear wall 12 are supplied from the interior manufacturer as a single seat unit set, and by arranging them in front and behind each other and attaching them to the aircraft 1, the rear wall 12 can also be used as the front wall 11.

The front wall 11 has, on both sides thereof, trapezoidal columnar protrusions 11a and 11b protruding forward. Similarly, the rear wall 12 has, on both sides thereof, trapezoidal columnar protrusions 12a and 12b protruding forward. The interior of the protrusions 12a, 12b of the rear wall 12 is hollow, the first side table 16 is placed on an upper surface of the protrusion 12a, and the second side table 17 is placed on an upper surface of the protrusion 12b. The same applies to the front wall 11.

As illustrated in FIG. 4, the front wall 11 and the rear wall 12 have a substantially W like shape when viewed from above. In addition, the axis line X1 of the first seat 13 and the axis line X2 of the second seat 14 are angled to opposite sides at the same angle with respect to the traversal direction D of the aircraft 1. As a result, it is possible to reduce the dimensions of the first seat 13 and second seat 14 along the traveling direction D when in the bed state (FIG. 5), and a large number of seat units can be mounted on the aircraft 1. On the other hand, by arranging the first seat 13 and the second seat 14 in such a manner, a substantially triangular prism-shaped space is created between the first seat 13 and the second seat 14. The intermediate portion 15 is provided by utilizing this space in order to make effective use of the space.

The intermediate portion 15 is disposed in the triangular prism-shaped space between the front wall 11, the first seat 13, and the second seat 14 so as to be in contact therewith. Although the first seat 13 and the second seat 14 have the same structure, they may also be different from each other. It should be noted that the first seat 13 or the second seat 14 may be used as the seat 20 on the window side.

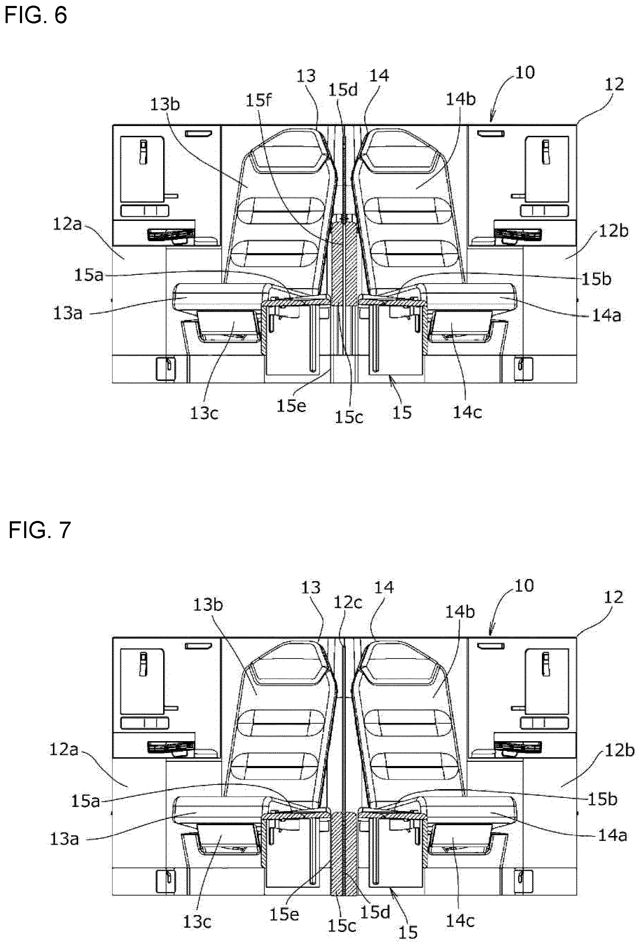

The first seat 13 has a first seating portion 13a and a first backrest 13b. The first backrest 13b is pivotally connected to the rear end of the first seating portion 13a. By means of a user operating a switch (not shown in the figures), a reclining mechanism 13c (see FIG. 6, which will be described later) is driven and controlled, and at the same time that the first backrest 13b reclines backward with respect to the first seating portion 13a, the first seating portion 13a slides horizontally forward, and the upper surfaces of the first seating portion 13a and the first backrest 13b become horizontally flat. This is referred to as the bed state (see FIG. 5). When in the bed state, a part of the first seating portion 13a enters the inside of the protrusion 11a. That is, the inside of the protrusion 11a becomes a part of the use space of the user, and the user can extend his/her feet and lie down on the first seat 13.

From this bed state, by means of the user operating the switch (not shown in the figures) in reverse, at the same time that the first backrest 13b rises with respect to the first seating portion 13a, the first seating portion 13a slides backward, and the first backrest 13b becomes angled with respect to the first seating portion 13a.This is referred to as the seat state (see FIG. 3, FIG. 4). In the seat state, the reclining mechanism 13c may slightly lift the front end of the first seating portion 13a. This allows the user to sit on the first seating portion 13a with a comfortable posture.

Similarly, the second seat 14 has a second seating portion 14a and a second backrest 14b. The second backrest 14b is pivotally connected to the rear end of the second seating portion 14a. By means of a user operating a switch (not shown in the figures), a reclining mechanism 14c (see FIG. 6, while will be described later) is driven and controlled, and at the same time that the second backrest 14b reclines backward with respect to the second seating portion 14a, the second seating portion 14a slides horizontally forward, and the upper surfaces of the second seating portion 14a and the second backrest 14b become horizontally flat. This is referred to as the bed state (see FIG. 5). When in the bed state, a part of the second seating portion 14a enters the inside of the protrusion 11b. That is, the inside of the protrusion 11b becomes a part of the use space of the user, and the user can extend his/her feet and lie down on the second seat 14.

From this bed state, by means of the user operating the switch (not shown in the figures) in reverse, at the same time that the second backrest 14b rises with respect to the second seating portion 14a, the second seating portion 14a slides backward, and the second backrest 14b becomes angled with respect to the second seating portion 14a. This is referred to as the seat state (see FIG. 3 and FIG. 4). In the seat state, the reclining mechanism 14c may slightly lift the front end of the second seating portion 14a. This allows the user to sit on the second seating portion 14a with a comfortable posture. It should be noted that, with regard to the reclining mechanisms 13c and 14c, the technique of Japanese Translation of PC International Application Publication No. 2010-520117 can be used.

In FIG. 5, the intermediate portion 15 includes a pedestal 15a that has a triangular prism shape disposed on the first seat 13 side, a pedestal 15b that has a triangular prism shape disposed on the second seat 14 side, a rectangular parallelepiped support portion 15c disposed between the pedestals 15a and 15b, and a partition plate 15d supported by the support portion 15c. The support portion 15c and the partition plate 15d extend from the rear surface of the front wall 11 to the front surface of the rear wall 12. As illustrated in FIG. 5, the end portions of the partition plate 15d are engaged with a vertical groove 12c of the rear surface of the front wall 11 and a vertical groove 12c on the rear surface of the rear wall 12, and can be raised and lowered by being guided by these.

FIG. 6 and FIG. 7 are cross-sectional views taken along the line A-A of FIG. 3. In the figures, the pedestals 15a and 15b are fixed to the floor, and the upper surface thereof is covered with a material having cushion properties in the same way as the seating portion. The support portion 15c is disposed on the guide 15e between the pedestals 15a and 15b so as to be slidable in the vertical direction. Each of the pedestals 15a and 15b may be composed of a plurality of members.

The support portion 15c, which is covered with a material having cushion properties similar to the pedestals 15a and 15b, includes a slit 15f opening at the center of the upper surface. The partition plate 15d is disposed so as to be slidable in the vertical direction within the slit 15f. The partition plate 15d is preferably made of translucent or opaque resin, for example.

As an example, in the case that the users sitting in the first seat 13 and the second seat 14 are complete stranger, it is desirable to define a private space for each of the first seat and the second seat 14. In such a case, the user or an attendant manually or electrically slides the support portion 15c upward with respect to the pedestals 15a and 15b, and slides the partition plate 15d upward with respect to the support portion 15c. Such a state is referred to as a shielded state, and is illustrated in FIG. 2 and FIG. 6. In the shielded state, the upper end of the partition plate 15d is above the eye level (usually 10 cm or more below the upper end of the first backrest 13b or the second backrest 14b) of the users seated on the first seating portion 13a or the second seating portion 14a in the seat state. As a result, a private space for a user sitting in the first seat 13 or the second seat 14 is secured.

On the other hand, a user or an attendant can manually or electronically slide the support portion 15c downward with respect to the pedestals 15a and 15b, and slide the partition plate 15d downward with respect to the support portion 15c to house them internally. This state is referred to as an open state. In the open state, as illustrated in FIG. 7, the height positions of the upper surfaces of the pedestals 15a and 15b and the upper surface of the support portion 15c substantially coincide. In addition, the height of the upper surface of the support portion 15c and the height of the upper end of the partition plate 15d substantially coincide. That is, as illustrated in FIG. 7, the entire upper surface of the intermediate portion 15 has a uniform height.

While maintaining such a state, as illustrated in FIG. 5, when the first seat 13 and the second seat 14 are put into the bed state, the height of the first backrest 13b and the second backrest 14b substantially coincide with the height of the upper surface of the intermediate portion 15.

Then, a wide space having a flat upper surface formed by the first seat 13, the second seat 14, and the intermediate portion 15 is formed between the front wall 11 and the rear wall 12.

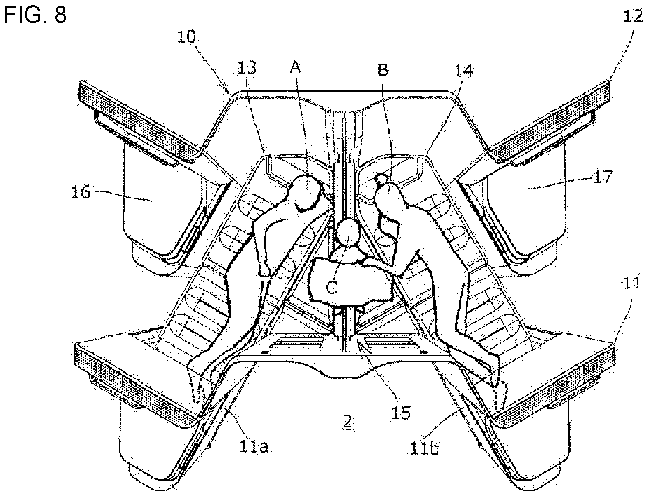

FIG. 8 illustrates a use example of the space obtained in the seat unit 10. A state is illustrated in which a user A lies on the first seat 13 in the bed state, a user B lies on the second seat 14 in the bed state, and an infant C lies on the intermediate portion 15 in which the partition plate 15d and the support portion 15c have been lowered. Since the intermediate portion 15 becomes flat by lowering the support portion 15c and the partition plate 15d into the open state, the intermediate portion 15 does not get in the way when the infant C lies down. Further, as illustrated by the dotted line, since the feet of the users A and B can be housed in the protrusions 11a and 11b of the front wall 11, the user can extend his/her feet and assume a comfortable posture.

According to the seat unit for an aircraft according to the present embodiment, it is not necessary to reserve an adult seat for the infant C, and it is possible to reduce the economic burden on the users A and B who accompany the infant C.

In contrast, when people who are unfamiliar with each other are seated in the first seat 13 and the second seat 14, respectively, as illustrated in FIG. 2 and FIG. 6, by raising the support portion 15c and the partition plate 15d into the shielded state, it is possible to secure respective private spaces. In other words, since the seat unit 10 can be commonly used regardless of whether the user is accompanied by an infant or not, the seat occupancy rate of the aircraft can be improved.

Furthermore, according to the present embodiment, by providing the support portion 15c, it is possible to lift the upper end of the partition plate 15d to a high position in the shielded state while retaining the intermediate portion 15 in a low position. That is, supposing that there were no support portion 15c, in a case that the height of the upper surface of the intermediate portion 15 (the height of the upper end of the partition plate 15d) were made to coincide with the upper surface height of the first backrest 13b or the second backrest 14b in the bed state, the height of the partition plate 15d would only be twice the height of the intermediate portion 15 in the shielded state, at maximum. In such a case, since the height of the partition plate 15d in the shielded state falls below the eye level of a user sitting on the seating portion, it becomes impossible to secure a private space between the first seat 13 side and the second seat 14 side.

Accordingly, in the present embodiment, the intermediate portion 15 is provided with a support portion 15c in a two-stage lifting structure, the support portion 15c is slid with respect to the pedestals 15a and 15b, and the partition plate 15d is slid with respect to the support portion 15c. As a result, theoretically, it is possible to raise the upper end of the partition plate 15d up to a height position of approximately three times the height of the intermediate portion 15. It should be noted that, by providing a plurality of support portions, a three-stage or more lifting structure can be provided.

Furthermore, the intermediate portion 15 can be used not only for infants, but also for the purpose of keeping valuable musical instruments within sight when, for example, a musician or the like boards. Alternatively, the intermediate portion 15 may be used for placing a shogi board, a chess board, or the like, for example, when the passenger in the first seat 13 and the passenger in the second seat 14 wish to play a shogi game or a chess game.

In addition, it is also possible to apply various modifications to the above examples without departing from the scope of the present invention. For example, the upper end of the partition plate 15d in the shielded state may be lower than the upper surface of the intermediate portion 15.

### [Reference Signs List]

1 : Aircraft, 2 : Floor, 11 : Front wall, 12 : Rear wall, 13 : First seat, 14 : Second seat, 15 : Intermediate portion, 15c: Support portion, 15d: Partition plate, 16 : First side table, 17 : Second side table

## Claims

1. A seat unit (10) for an aircraft comprising:
a first seat (13) comprising a first backrest (13b) and a first seating portion (13a) in which said first backrest (13b) is pivotable with respect to the first seating portion (13a) and is capable of changing forms between a seat state in which passengers can sit and a bed state in which the first seating portion (13a) and the first backrest (13b) are flat;
a second seat (14) disposed adjacent to the first seat, the second seat comprising a second backrest (14b) and a second seating portion (14a), in which the second backrest (14b) is pivotable with respect to the second seating portion (14a) and is capable of changing forms between a seat state in which passengers can sit and a bed state in which the second seating portion (14a) and the second backrest (14b) are flat; and
an intermediate portion (15) arranged between the first seat (13) and the second seat (14),
when the first seat (13) and the second seat (14) are in the bed state, the intermediate portion (15) is adjacent to the first backrest (13b) and the second backrest (14b) while a height of an upper surface of the intermediate portion (15) substantially coincides with a height of the first backrest (13b) and the second backrest (14b),
the intermediate portion (15) includes a first pedestal (15a) having a triangular prism shape and being disposed (15a) on the first seat (13) side and a second pedestal (15b) having a triangular prism shape and being disposed on the second seat (14) side, as well as a rectangular parallelepiped support portion (15c) disposed between the first and second pedestals (15a, 15b) and a partition plate (15d), supported by the support portion (15c) and vertically movable between a housed state, in which the partition plate (15d) is housed in the support portion (15c) of intermediate portion (15), and a raised state, and
when in the housed state, an upper end of the partition plate (15d) substantially coincides with or is located at or below the upper surface of the support portion (15c) of the intermediate portion (15), and when in the raised state, the upper end of the partition plate (15d) can move to a position above eye level of a user seated on at least the first seating portion (13a) or the second seating portion (14a) in the seat state; and
the height positions of upper surfaces of the first and second pedestals (15a, 15b) and the upper surface of the support portion (15c) substantially coincide so that the entire upper surface of the intermediate portion (15) has a uniform height; and
the pedestals (15a, 15b), and the support portion (15c) are covered with a material having cushion properties.

2. The seat unit (10) for an aircraft according to claim 1, wherein:
the support member (15c) is movable upward from the intermediate portion with respect to the first and second pedestals (15a, 15b) and the partition plate (15d) is movable upward from the support member.

3. The seat unit for an aircraft according to claim 1 or 2, wherein:
an axis (X1) of the first seat (13) and an axis (X2) of the second seat (14) are angled to opposite sides with respect to a traversal direction of the aircraft, and the intermediate portion is disposed in a triangular prism shaped space between the first seat (13) and the second seat (14).

4. The seat unit for an aircraft according to any of claim 1 to 3:
wherein the first seat (13) further comprises a first user operated switch and a first reclining mechanisms (13c), the first user operated switch being configured to drive and control the first reclining mechanisms (13c),
wherein the second seat (14) further comprises a second user operated switch and a second reclining mechanisms (14c), the second user operated switch being configured to drive and control the second reclining mechanisms (14c), and
wherein, when a form change from the seat state to the bed state is performed and at the same time as a user operating the first user operated switch, the first backrest (13b) reclines backward with respect to the first seating portion (13a), the first seating portion (13a) slides horizontally forward, and the upper surfaces of the first seating portion (13a) and the first backrest (13b) become horizontally flat and
wherein, when a form change from the seat state to the bed state is performed and at the same time as a user operating the second user operated switch, the second backrest (14b) reclines backward with respect to the second seating portion (14a), the second seating portion (14a) slides horizontally forward, and the upper surfaces of the second seating portion (14a) and the second backrest (14b) become horizontally flat.

## Patentansprüche

1. Sitzeinheit (10) für ein Flugzeug, umfassend:
einen ersten Sitz (13) mit einer ersten Rückenlehne (13b) und einem ersten Sitzteil (13a), wobei die erste Rückenlehne (13b) in Bezug auf das erste Sitzteil (13a) schwenkbar ist und zwischen einem Sitzzustand, in dem Passagiere sitzen können, und einem Bettzustand, in dem das erste Sitzteil (13a) und die erste Rückenlehne (13b) eben sind, die Form ändern kann;
einen zweiten Sitz (14), der angrenzend an den ersten Sitz angeordnet ist, wobei der zweite Sitz eine zweite Rückenlehne (14b) und ein zweites Sitzteil (14a) umfasst, wobei die zweite Rückenlehne (14b) in Bezug auf das zweite Sitzteil (14a) schwenkbar ist und zwischen einem Sitzzustand, in dem Passagiere sitzen können, und einem Bettzustand, in dem das zweite Sitzteil (14a) und die zweite Rückenlehne (14b) eben sind, die Form ändern kann; und
ein Zwischenteil (15), das zwischen dem ersten Sitz (13) und dem zweiten Sitz (14) angeordnet ist,
wobei, wenn sich der erste Sitz (13) und der zweite Sitz (14) im Bettzustand befinden, das Zwischenteil (15) an die erste Rückenlehne (13b) und die zweite Rückenlehne (14b) angrenzt, während eine Höhe einer oberen Fläche des Zwischenteils (15) im Wesentlichen mit einer Höhe der ersten Rückenlehne (13b) und der zweiten Rückenlehne (14b) übereinstimmt,
wobei das Zwischenteil (15) einen ersten Sockel (15a) mit einer dreieckigen Prismenform, der auf der Seite des ersten Sitzes (13) angeordnet ist, und einen zweiten Sockel (15b) mit einer dreieckigen Prismenform, der auf der Seite des zweiten Sitzes (14) angeordnet ist, sowie ein rechteckiges quaderförmiges Stützteil (15c), das zwischen dem ersten und dem zweiten Sockel (15a, 15b) angeordnet ist, und eine Trennplatte (15d) umfasst, die durch das Stützteil (15c) gestützt wird und vertikal zwischen einem aufgenommenen Zustand, in dem die Trennplatte (15d) in dem Stützteil (15c) des Zwischenteils (15) aufgenommen ist, und einem angehobenen Zustand bewegbar ist, und
wobei im aufgenommenen Zustand ein oberes Ende der Trennplatte (15d) im Wesentlichen mit der oberen Fläche des Stützteils (15c) des Zwischenteils (15) übereinstimmt oder sich an oder unterhalb dieser befindet, und im angehobenen Zustand das obere Ende der Trennplatte (15d) sich in eine Position oberhalb der Augenhöhe eines Benutzers bewegen kann, der zumindest auf dem ersten Sitzteil (13a) oder dem zweiten Sitzteil (14a) im Sitzzustand sitzt; und
wobei die Höhenpositionen der oberen Flächen des ersten und des zweiten Sockels (15a, b) und der oberen Fläche des Stützteils (15c) im Wesentlichen übereinstimmen, sodass die gesamte obere Fläche des Zwischenteils (15) eine einheitliche Höhe aufweist; und
wobei die Sockel (15a, 15b) und das Stützteil (15c) mit einem Material mit Polstereigenschaften bedeckt sind.

2. Sitzeinheit (10) für ein Flugzeug nach Anspruch 1, wobei:
das Stützglied (15c) in Bezug auf den ersten und den zweiten Sockel (15a, 15b) nach oben bewegbar ist und die Trennplatte (15d) vom Stützglied nach oben bewegbar ist.

3. Sitzeinheit für ein Flugzeug nach Anspruch 1 oder 2, wobei:
eine Achse (X1) des ersten Sitzes (13) und eine Achse (X2) des zweiten Sitzes (14) in Bezug auf eine Querrichtung des Flugzeugs zu entgegengesetzten Seiten gewinkelt sind, und das Zwischenteil in einem dreieckig prismenförmigen Raum zwischen dem ersten Sitz (13) und dem zweiten Sitz (14) angeordnet ist.

4. Sitzeinheit für ein Flugzeug nach einem der Ansprüche 1 bis 3:
wobei der erste Sitz (13) ferner einen ersten benutzerbetätigten Schalter und einen ersten Liegemechanismus (13c) umfasst, wobei der erste benutzerbetätigte Schalter dazu ausgelegt ist, den ersten Liegemechanismus (13c) anzutreiben und zu steuern,
wobei der zweite Sitz (14) ferner einen zweiten benutzerbetätigten Schalter und einen zweiten Liegemechanismus (14c) umfasst, wobei der zweite benutzerbetätigte Schalter dazu ausgelegt ist, den zweiten Liegemechanismus (14c) anzutreiben und zu steuern, und
wobei, wenn eine Formänderung vom Sitzzustand in den Bettzustand durchgeführt wird und gleichzeitig ein Benutzer den ersten benutzerbetätigten Schalter betätigt, die erste Rückenlehne (13b) in Bezug auf das erste Sitzteil (13a) nach hinten geneigt wird, das erste Sitzteil (13a) horizontal nach vorne gleitet und die oberen Flächen des ersten Sitzteils (13a) und der ersten Rückenlehne (13b) horizontal eben werden, und
wobei, wenn eine Formänderung vom Sitzzustand in den Bettzustand durchgeführt wird und gleichzeitig ein Benutzer den zweiten benutzerbetätigten Schalter betätigt, die zweite Rückenlehne (14b) in Bezug auf das zweite Sitzteil (14a) nach hinten geneigt wird, das zweite Sitzteil (14a) horizontal nach vorne gleitet und die oberen Flächen des zweiten Sitzteils (14a) und der zweiten Rückenlehne (14b) horizontal eben werden.

## Revendications

1. Unité de siège (10) d'avion comprenant :
un premier siège (13) comprenant un premier dossier (13b) et une première section d'assise (13a) dans laquelle ledit premier dossier (13b) est pivotable par rapport à la première section d'assise (13a) et est apte à changer de forme entre un état de siège dans lequel les passagers peuvent être assis et un état de lit dans lequel la première section d'assise (13a) et le premier dossier (13b) sont à plat ;
un second siège (14) disposé à côté du premier siège, le second siège comprenant un second dossier (14b) et une seconde section d'assise (14a), dans lequel le second dossier (14b) est pivotable par rapport à la seconde section d'assise (14a) et est apte à changer de forme entre un état de siège dans lequel les passagers peuvent être assis et un état de lit dans lequel la seconde section d'assise (14a) et le second dossier (14b) sont à plats ; et
une partie intermédiaire (15) disposée entre le premier siège (13) et le second siège (14),
lorsque le premier siège (13) et le second siège (14) sont à l'état de lit, la partie intermédiaire (15) est adjacente au premier dossier (13b) et au second dossier (14b) tandis qu'une hauteur de la surface supérieure de la partie intermédiaire (15) coïncide en substantiellement avec une hauteur du premier dossier (13b) et du second dossier (14b),
la partie intermédiaire (15) comprend un premier socle (15a) ayant une forme de prisme triangulaire et disposé (15a) du côté du premier siège (13) et un second socle (15b) ayant une forme de prisme triangulaire et disposé du côté du second siège (14), ainsi qu'une partie de support (15c) en forme de parallélépipède rectangle disposée entre le premier et le second socles (15a, 15b) et une cloison de séparation (15d), supportée par la partie de support (15c) et pouvant être déplacée verticalement entre un état logé, dans lequel la cloison de séparation (15d) est logée dans la partie de support (15c) de la partie intermédiaire (15), et un état relevé, et
à l'état logé, une extrémité supérieure de la cloison de séparation (15d) coïncide substantiellement avec ou est située au même niveau ou sous la surface supérieure de la partie de support (15c) de la partie intermédiaire (15), et à l'état relevé, l'extrémité supérieure de la cloison de séparation (15d) peut se déplacer jusqu'à une position située au-dessus du niveau des yeux d'un utilisateur assis sur au moins la première section d'assise (13a) ou la deuxième section d'assise (14a) à l'état de siège ; et
les positions en hauteur des surfaces supérieures des premier et second socles (15a, 15b) et de la surface supérieure de la partie de support (15c) coïncident substantiellement de telle sorte que la totalité de la surface supérieure de la partie intermédiaire (15) a une hauteur uniforme ; et
les socles (15a, 15b) et la partie de support (15c) sont recouverts d'un matériau présentant des propriétés amortissantes.

2. Unité de siège (10) d'avion selon la revendication 1, dans laquelle :
La partie de support (15c) peut être déplacée vers le haut à partir de la partie intermédiaire par rapport aux premier et deuxième socles (15a, 15b) et la cloison de séparation (15d) peut être déplacée vers le haut à partir de la partie de support.

3. Siège d'avion selon la revendication 1 ou 2, dans lequel :
un axe (X1) du premier siège (13) et un axe (X2) du second siège (14) sont inclinés vers des côtés opposés par rapport à une direction transversale de l'avion, et la partie intermédiaire est disposée dans un espace en forme de prisme triangulaire entre le premier siège (13) et le second siège (14).

4. Unité de siège d'avion selon l'une quelconque des revendications 1 à 3 :
dans lequel le premier siège (13) comprend en outre un premier interrupteur actionné par l'utilisateur et un premier mécanisme d'inclinaison (13c), le premier interrupteur actionné par l'utilisateur étant configuré pour entraîner et contrôler le premier mécanisme d'inclinaison (13c),
dans lequel le second siège (14) comprend en outre un second interrupteur actionné par l'utilisateur et un second mécanisme d'inclinaison (14c), le second interrupteur actionné par l'utilisateur étant configuré pour entraîner et contrôler le second mécanisme d'inclinaison (14c), et
dans lequel, lorsqu'un changement de forme de l'état de siège à l'état de lit est effectué et en même temps qu'un utilisateur actionne le premier interrupteur actionné par l'utilisateur, le premier dossier (13b) s'incline vers l'arrière par rapport à la première section d'assise (13a), la première section d'assise (13a) glisse horizontalement vers l'avant, et les surfaces supérieures de la première section d'assise (13a) et du premier dossier (13b) deviennent horizontalement planes et
dans lequel, lorsqu'un changement de forme de l'état de siège à l'état de lit est effectué et en même temps qu'un utilisateur actionne le deuxième interrupteur actionné par l'utilisateur, le deuxième dossier (14b) s'incline vers l'arrière par rapport à la deuxième section d'assise (14a), la deuxième section d'assise (14a) glisse horizontalement vers l'avant, et les surfaces supérieures de la deuxième section d'assise (14a) et du deuxième dossier (14b) deviennent horizontalement planes.
